# NOUVEAU FASCICULE DE BREVET EUROPEEN

(11) **EP 2 164 031 B2**
(45) Date de publication et mention de la décision concernant l'opposition: **28.06.2017**
(45) Mention de la délivrance du brevet: 25.07.2012
(21) Numéro de dépôt: 09169345.7
(22) Date de dépôt: 03.09.2009
(51) Int. Cl.: G06K 19/073

(54) **Procédé et dispositif de protection d'un microcircuit contre des attaques**
Verfahren und Vorrichtung zum Schutz eines Mikroschaltkreises vor Angriffen
Method and device for protecting an integrated circuit against attacks

(30) Priorité: 11.09.2008 FR 0856116
(43) Date de publication de la demande: 17.03.2010
(73) Titulaire: Oberthur Technologies, 92300 Levallois-Perret (FR)
(72) Inventeur: Thiebauld De La Crouée, Hugues, 33600 Pessac (FR); Chamley, Olivier, 33850 Leognan (FR)
(74) Mandataire: Santarelli

(56) Documents cités:
- FR-A- 2 878 633
- KOCHER P ET AL: "DIFFERENTIAL POWER ANALYSIS" ADVANCES IN CRYPTOLOGY. CRYPTO '99. 19TH ANNUAL INTERNATIONAL CRYPTOLOGY CONFERENCE. SANTA BARBARA, CA, AUG. 15 - 19, 1999. PROCEEDINGS; [LECTURE NOTES IN COMPUTER SCIENCE ; VOL. 1666], BERLIN : SPRINGER, DE, vol. CONF. 19, 1 janvier 1999 (1999-01-01) , pages 388-397, XP000863414 ISBN: 978-3-540-66347-8

## Description

La présente invention concerne un procédé et un dispositif de protection d'un microcircuit contre des attaques. Elle s'applique, en particulier, à la protection des cartes à puces contre les attaques avec analyse de consommation électrique (« side channel attacks with power analysis »).

Document FR 2 878 633 A décrit un tel procédé et dispositif.

Le document « Handbuch der Chipkarten ; Aufbau - Funktionsweise - Einsatz » de Wolfgang Rankl et Wolfgang Effing, ISBN 3-446-21115-2, décrit de tel procédés et dispositif.

Pour protéger les données et programmes qu'elles conservent, des cartes à microprocesseur peuvent mettre en oeuvre un drapeau de destruction (« kill-card flag »). Lorsque la carte détecte un événement qu'elle considère être une attaque, elle met irréversiblement ce drapeau à une valeur donnée et ce drapeau doté de cette valeur interdit le fonctionnement ultérieur du microprocesseur. Ce drapeau est conservé en mémoire non volatile et mettre le drapeau à la valeur donnée implique d'effectuer une écriture en mémoire non volatile (par l'exécution d'une fonction dite « Killcard »).

Des attaques sophistiquées sont basées sur une analyse de l'exécution afin de détecter l'exécution d'une fonction de protection, ou contre-mesure, lancée par un microcircuit, afin de perturber l'exécution de cette fonction de protection par une action physique sur le microcircuit (par perturbation de la fréquence d'horloge fournie au microcircuit, par laser sur une zone du circuit, etc ...) ou d'empêcher l'exécution de cette fonction de protection (par coupure de l'alimentation du microcircuit par exemple). Ainsi, la détection de l'exécution de la fonction de protection est un préalable à sa perturbation ou son inhibition. Cela permet à l'attaquant de mener ainsi à bien son attaque en rendant inopérante la fonction de protection où en l'affaiblissant.

Certaines de ces attaques sophistiquées utilisent des techniques d'analyse de consommation pour déterminer le fonctionnement du microprocesseur. En particulier, les opérations d'écriture en mémoire non volatile imposent une consommation électrique très supérieure aux opérations arithmétiques en mémoire vive. L'analyse de consommation utilise ainsi le fait que différentes opérations consomment différentes quantités d'électricité. Ces différentes opérations présentent ainsi différentes signatures en termes de consommation électrique. Le fait qu'une opération d'écriture en mémoire non volatile est très distinctive, car très consommatrice d'électricité, permet à l'attaque d'éviter que le drapeau prenne effectivement la valeur donnée qui interdit l'utilisation ultérieure du microprocesseur. Dès que la signature de cette écriture est détectée par l'attaque, l'alimentation du microprocesseur est coupée et l'opération d'écriture n'est pas finalisée.

La présente invention vise à remédier à ces inconvénients.

A cet effet, selon un premier aspect, la présente invention vise un procédé selon la revendication 1.

Ainsi, un attaquant ne peut pas déterminer si son attaque a été détectée en percevant la réalisation de la fonction de protection puisque même si l'attaque n'a pas été détectée, la fonction leurre simule la réalisation de la fonction de protection.

On observe que la simulation de la fonction de protection par la fonction leurre est préférentiellement exécutée jusqu'à un instant où il n'est plus possible pour un attaquant de bénéficier de la détection de l'exécution de la fonction de protection pour mener à bien son attaque. Ainsi, préférentiellement, la fonction leurre à une durée supérieure ou égale à celle de la fonction de protection ou à celle prise par la fonction de protection pour interdire le fonctionnement normal du microcircuit, la fonction leurre pouvant être perceptible à la suite de cette durée sans que cela n'empêche la protection du microcircuit.

On observe qu'une grandeur physique perceptible à l'extérieur du microcircuit et modulée par la fonction de protection et par la fonction leurre peut être un rayonnement ou un champ électromagnétique, une résistance, une capacité, une inductance, un voltage, un ampérage ou une consommation électrique, par exemple.

Selon des caractéristiques particulières, à la suite d'une étape de détermination si une attaque est détectée, la fonction de protection n'est pas exécutée si la fonction leurre est exécutée.

Selon des caractéristiques particulières, la fonction leurre présente une consommation électrique sensiblement identique à celle de la fonction de protection.

Ainsi, dans le cas où la consommation électrique provoquée par la réalisation de la fonction de protection est perceptible depuis l'extérieur du microcircuit, on prévoit, au cours du fonctionnement normal du microcircuit, de réaliser une fonction leurre présentant la même signature, en termes de consommation électrique. L'attaquant ne peut donc plus distinguer, sur la base de la consommation électrique du microcircuit, l'exécution d'une fonction de protection et le fonctionnement normal du microcircuit.

Comme mentionné plus haut, dans le cas où l'attaquant arrête l'alimentation du microcircuit à chaque fois que la fonction leurre se déclenche, il ne peut plus analyser le fonctionnement du microcircuit. L'attaque devient donc inefficace et le microcircuit est protégé contre ce type d'attaque. On note que, dans ce type d'attaque, si l'attaquant ne coupe pas l'alimentation électrique lorsqu'il détecte la consommation électrique de la fonction leurre, afin de poursuivre l'observation du fonctionnement du microcircuit après la réalisation d'une fonction leurre, il laisse nécessairement s'exécuter la fonction de protection dès que son attaque a été détectée.

Selon des caractéristiques particulières, la fonction de protection est une fonction de mise hors service du microcircuit, préférentiellement par écriture d'une donnée en mémoire non volatile. Par exemple, la fonction de protection est une fonction « Killcard » exposée ci-dessus.

Selon des caractéristiques particulières, la fonction de protection effectue une étape d'écriture d'une donnée prédéterminée à une première adresse d'une mémoire non-volatile.

Ainsi, en prévoyant, dans le fonctionnement normal du microcircuit, même en l'absence de détection d'une attaque, de réaliser une fonction leurre présentant la même signature en termes de consommation électrique que la fonction « Killcard », on rend l'attaque inefficace.

Selon des caractéristiques particulières, la fonction leurre effectue une étape d'écriture en mémoire non volatile à une deuxième adresse différente de la première adresse.

Selon des caractéristiques particulières, au cours de l'étape d'écriture à la deuxième adresse par la fonction leurre, on écrit un même nombre d'informations binaires qu'au cours de l'écriture à la première adresse par la fonction de protection, et on met en oeuvre le même algorithme d'écriture que lors de l'écriture à la première adresse par la fonction de protection.

Selon des caractéristiques particulières, au cours de l'étape d'écriture à la deuxième adresse par la fonction leurre, on écrit ladite donnée prédéterminée à ladite deuxième adresse.

Selon des caractéristiques particulières, au cours de l'étape de réalisation de la fonction leurre, on effectue une écriture en mémoire non volatile, à la première adresse, d'une donnée différente de ladite donnée prédéterminée.

Chacune de ces caractéristiques particulières renforce la similitude des signatures de la fonction de protection et de la fonction leurre, en termes de consommation électrique.

Selon des caractéristiques particulières, lesdites étapes d'écriture en mémoire non volatile mettent en oeuvre un algorithme différent des autres étapes d'écriture en mémoire non volatile effectuées lors du fonctionnement normal du microcircuit.

On note que l'algorithme peut être différent de manière logicielle ou matérielle, ce dernier cas s'appliquant lorsque les cellules de la mémoire sont de natures différentes.

Selon des caractéristiques particulières, au cours d'au moins une partie des dites étapes d'écriture en mémoire non volatile, on ne met pas en oeuvre de donnée de vérification. Notamment, on ne met pas en oeuvre de somme de vérification (en anglais « checksum »).

Selon des caractéristiques particulières, au cours d'au moins une partie des dites étapes d'écriture en mémoire non volatile, on ne met pas en oeuvre de relecture de la donnée écrite.

Selon des caractéristiques particulières, au cours d'au moins une partie des dites étapes d'écriture en mémoire non volatile, on ne met pas en oeuvre d'effacement de la zone d'écriture (« erase »).

Grâce à chacune de ces dispositions, on accélère les étapes d'écriture et on réduit donc le risque que l'attaque ait le temps de couper l'alimentation avant la fin de la fonction « killcard », sans, pour autant, que les signatures des différentes fonctions soient différentes. De plus, on accélère le fonctionnement du microcircuit puisque les durées de réalisation de certaines fonctions d'écriture sont réduites. Enfin, on réduit l'usure des cellules de mémoire concernées par la fonction leurre en réduisant le nombre de cycles d'écritures/lectures.

Selon des caractéristiques particulières, si la ré-écriture de données, en mémoire non volatile est perceptible, depuis l'extérieur dudit microcircuit, de manière identique à l'écriture initiale des dites données, la fonction leurre ne comporte pas d'effacement de la zone d'écriture. En effet, dans ce cas, la fonction de protection, qui impose une écriture, et la fonction leurre qui, hormis sa première itération, peut comporter des ré-écritures identiques, peuvent avoir la même signature sans la phase préliminaire dite « erase ».

Selon des caractéristiques particulières, ledit effacement de la zone d'écriture est remplacé, dans chaque étape d'écriture dont il est absent, par un effacement partiel de la zone d'écriture.

Par exemple, on réalise un tel effacement partiel en effectuant un déchargement (ou chargement selon les architectures de mémoire) des charges de chaque cellule de mémoire concernée par l'écriture pendant une durée inférieure à celle permettant un déchargement (ou chargement) complet de la cellule de mémoire.

Selon des caractéristiques particulières, la fonction de protection met en oeuvre ladite étape d'effacement de la zone d'écriture. Grâce à ces dispositions, on accélère le fonctionnement du microcircuit, puisque la fonction leurre ne met pas toujours en oeuvre l'effacement de la zone d'écriture tout en garantissant la bonne écriture par la fonction de protection, lors de la détection d'une attaque.

Selon des caractéristiques particulières, une partie des exécutions de la fonction leurre comporte ladite étape d'effacement de la zone d'écriture. Ces caractéristique s'applique, notamment, au cas où les signatures d'écriture et de ré-écriture ne sont pas identiques et où la fonction de protection comporte la phase préliminaire d'effacement des cellules où l'écriture va s'effectuer.

Selon des caractéristiques particulières, la fonction de protection effectue une étape de chiffrement d'au moins une donnée sensible.

Selon des caractéristiques particulières, la fonction leurre n'a pas d'autre fonction que de simuler la fonction de protection.

La fonction leurre n'est ainsi pas fonctionnelle et n'influence pas le fonctionnement du microcircuit en dehors de sa phase d'exécution. Par exemple, la fonction leurre effectue l'écriture de données qui ne sont jamais lues ou le chiffrement d'au moins une donnée inutile au fonctionnement du microcircuit. Grâce à ces dispositions, on peut prévoir une fonction leurre plus rapide, par exemple une écriture plus rapide, par exemple, sans étape d'effacement et/ou sans étape de vérification de donnée écrite, que si la fonction leurre était utile au fonctionnement du microcircuit.

Selon un deuxième aspect, la présente invention vise un dispositif pour la mise en oeuvre d'un procédé selon la revendication 1.

Selon un troisième aspect, la présente invention vise une entité électronique de poche ou portable qui comporte le dispositif objet de la présente invention, tel que succinctement exposé ci-dessus.

Par exemple, cette entité électronique est telle qu'un PDA (acronyme de « personal digital assistant » pour assistant personnel numérique), une clef USB (acronyme de « universal serial bus » pour bus série universel), une carte à mémoire, un téléphone mobile, un passeport électronique ou une carte à puce (c'est-à-dire conforme à la norme ISO 7816 et sécurisée, par exemple certifiée conformément aux critères communs).

Les avantages, buts et caractéristiques particulières de ce dispositif et de cette entité étant similaires à ceux du procédé objet de la présente invention, tel que succinctement exposé ci-dessus, ils ne sont pas rappelés ici.

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement, un mode de réalisation particulier du dispositif objet de la présente invention,
- la figure 2 représente, sous forme d'un logigramme, des étapes mises en oeuvre dans un premier mode de réalisation particulier du procédé objet de la présente invention,
- la figure 3 représente, sous forme d'un logigramme, des étapes mises en oeuvre dans une étape d'écriture normale d'une mémoire non volatile,
- la figure 4 représente, sous forme d'un logigramme, des étapes mises en oeuvre dans une variante préférentielle du premier mode de réalisation du procédé objet de la présente invention et
- la figure 5 représente, sous forme d'un logigramme, des étapes mises en oeuvre dans un deuxième mode de réalisation particulier du procédé objet de la présente invention.

Dans la description qui va suivre, on a considéré, à titre d'exemple, la grandeur physique perceptible depuis l'extérieur du microcircuit est la consommation électrique, du fait que les attaques actuellement connues la concernent. Cependant, la présente invention ne se limite pas à ce type de grandeur physique modulée lors de la détection d'une attaque mais s'étend, bien au contraire, à toutes les grandeurs physiques modulées perceptibles à l'extérieur d'un microcircuit, par contact avec ce microcircuit ou avec des liaisons reliées à lui ou à distance.

Ainsi, une grandeur physique modulée concernée par la présente invention peut être un rayonnement ou un champ électromagnétique, une résistance, une capacité, une inductance, un voltage, un ampérage ou une consommation électrique, par exemple.

Si une attaque est détectée, on réalise une fonction de protection de protection du microcircuit et modulant, en conséquence, au moins une grandeur physique prédéterminée perceptible à l'extérieur dudit microcircuit. Conformément à la présente invention, au cours du fonctionnement normal du microcircuit, on réalise une fonction leurre simulant la fonction de protection en modulant chaque dite grandeur physique prédéterminée perceptible à l'extérieur dudit microcircuit de manière sensiblement identique à la fonction de protection. Cette simulation de la fonction de protection par la fonction leurre est préférentiellement exécuté jusqu'à un instant où il n'est plus possible pour un attaquant de bénéficier de la détection de l'exécution de la fonction de protection pour mener à bien son attaque. Ainsi, préférentiellement, la fonction leurre à une durée supérieure ou égale à celle prise par la fonction de protection pour interdire le fonctionnement normal du microcircuit, la fonction leurre pouvant être perceptible à la suite de cette durée sans que cela n'empêche la protection du microcircuit.

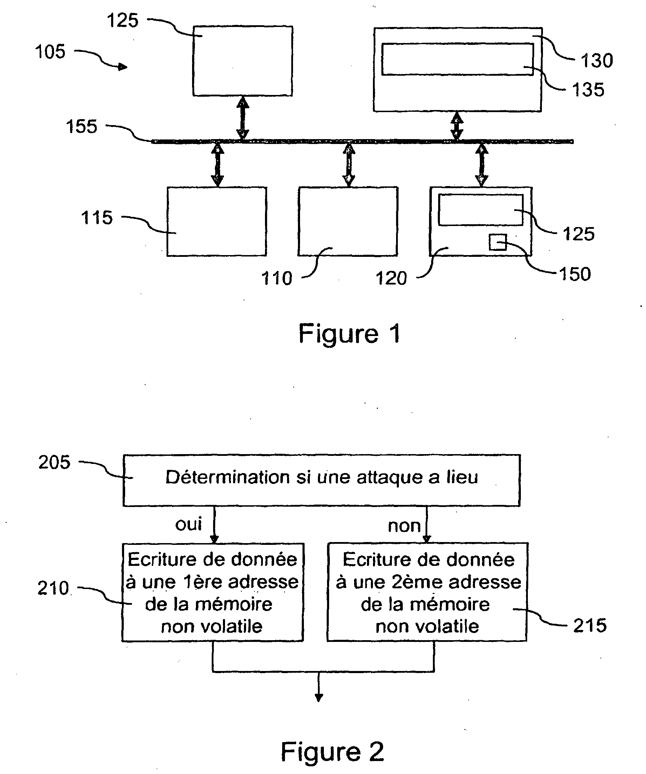

On observe, en figure 1, une carte à microcircuit 105 comportant, reliés entre eux par un bus 155, un microprocesseur 110, des entrées/sorties 115, une mémoire morte 120 conservant un système d'exploitation (« operating system ») 125, une mémoire non volatile 130 comportant une matrice de mémoire 135 et directement contrôlée par le microprocesseur 110.

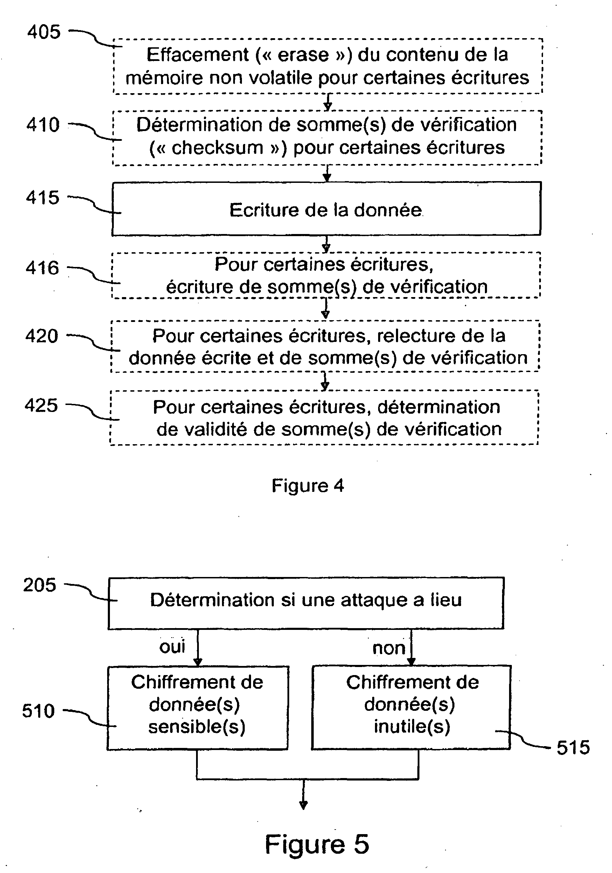

Un programme 150 d'écriture rapide tel qu'exposé en regard de la figure 4 est conservé soit dans la mémoire morte 120, comme illustré en figure 1, soit dans la mémoire non volatile 130, soit est câblé dans le microprocesseur 110. En variante, le programme 150 est directement implémenté par le système d'exploitation 125 conservé en mémoire morte 120.

La mémoire morte 120 ou la mémoire non volatile 130 conservent des instructions d'un programme de fonctionnement de la carte 105. Ce programme met, notamment, en oeuvre les étapes du mode de réalisation particulier du procédé illustré en figure 2.

Comme illustré en regard des figures 2 et 5, le procédé objet de la présente invention est mis en oeuvre à chaque fois que le fonctionnement de la carte à microcircuit 105 comporte une étape 205 de détermination si une attaque a lieu, selon des techniques connues.

Si une attaque est détectée, on effectue une fonction de protection destinée à protéger la carte et/ou son contenu.

Conformément à la présente invention, même si aucune attaque n'est détectée, on effectue une fonction leurre simulant la fonction de protection en étant perceptible, depuis l'extérieur dudit microcircuit, de manière sensiblement identique à la fonction de protection.

Dans des modes de réalisation simples, la fonction leurre est identique à la fonction de protection à une valeur de paramètre ou de variable près et ces valeurs présentent le même nombre de données binaires (« bits ») et, éventuellement, le même nombre de données binaires égales à « 0 ».

Comme illustré en figure 2, dans des modes de réalisation, la fonction de protection consiste, au cours d'une étape 210, à écrire une donnée prédéterminée à une première adresse d'une mémoire non-volatile. Il s'agit, par exemple, de mettre à une valeur prédéterminée un drapeau de destruction « kill flag », en écrivant une donnée prédéterminée, à une première adresse de la mémoire non volatile correspondant à ce drapeau.

Dans ces modes de réalisation, conformément à la présente invention, même si aucune attaque n'est détectée, on effectue une étape 215 de réalisation d'une fonction présentant la même signature, en termes de consommation électrique, que l'étape d'écriture d'une donnée prédéterminée à la première adresse de la mémoire non volatile.

Dans des modes de réalisation simples, au cours de l'étape de réalisation de la fonction leurre, on effectue une écriture en mémoire non volatile à une deuxième adresse différente de la première adresse.

Pour que les signatures soient les plus proches possible, au cours de l'étape d'écriture à la deuxième adresse, on écrit un même nombre d'informations binaires que la donnée prédéterminée et on met en oeuvre le même protocole d'écriture que lors de l'écriture de la donnée prédéterminée. Préférentiellement, au cours de l'étape d'écriture à la deuxième adresse, on écrit la donnée prédéterminée à la deuxième adresse.

Par exemple, si la fonction « Killcard(adresse1) » est utilisée lors de la détection d'une attaque, la fonction « Killcard(adresse2) » est mise en oeuvre lorsqu'il n'y a pas de détection d'une attaque.

Un code, ou série d'instructions, correspondant est le suivant :

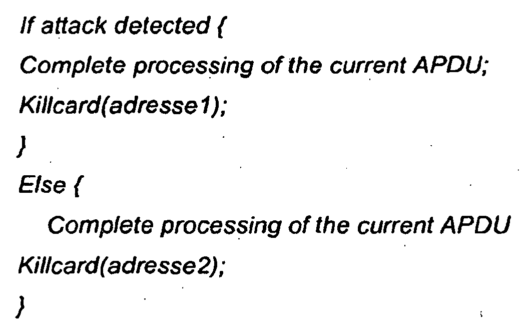

En variante, la fonction de protection, appelée « killcard1(adresse1) » est différente de la fonction leurre, appelée, par exemple, « killcard2(adresse2) », la seconde s'effectuant, par exemple, sans relecture ni vérification de donnée(s) de vérification, comme exposé plus loin.

Comme illustré en figure 5, dans des modes de réalisation, la fonction de protection consiste, au cours d'une étape 510, à chiffrer au moins un objet sensible conservé dans la mémoire non volatile, avec une clef secrète, à l'écrire dans la mémoire non volatile et à rendre inaccessible, par exemple en l'effaçant, la version en clair de l'objet sensible. Ainsi, une fois les données chiffrées, le microcircuit ne peut plus fonctionner normalement.

Dans ces modes de réalisation, conformément à la présente invention, même si aucune attaque n'est détectée, au cours du fonctionnement du microcircuit, on effectue une étape 515 de réalisation d'une fonction présentant la même signature, en termes de consommation électrique, que l'étape de chiffrement de chaque objet sensible, et d'écriture en mémoire non volatile. Par exemple, au cours de l'étape 515, on effectue un chiffrement de données inutiles au fonctionnement du microcircuit.

Du fait de la réversibilité du chiffrement, avec une clef symétrique ou asymétrique, l'émetteur (« issuer ») de la carte peut déchiffrer chaque donnée sensible ainsi chiffrée au cours de l'étape 510, la réécrire en mémoire non volatile et rendre ainsi la carte, de nouveau, opérationnelle.

En variante, seul un chiffrement partiel de données est réalisé par la fonction leurre. La fonction leurre n'a alors pas une durée aussi longue que la fonction de protection. En effet, même si l'attaquant peut alors détecter la fonction de protection, d'une durée plus longue, et couper immédiatement l'alimentation du microcircuit, le microcircuit est protégé car des données nécessaires à son fonctionnement, du moins normal, sont effacées, même si toutes les données devant être effacées par la fonction de protection ne l'ont pas été.

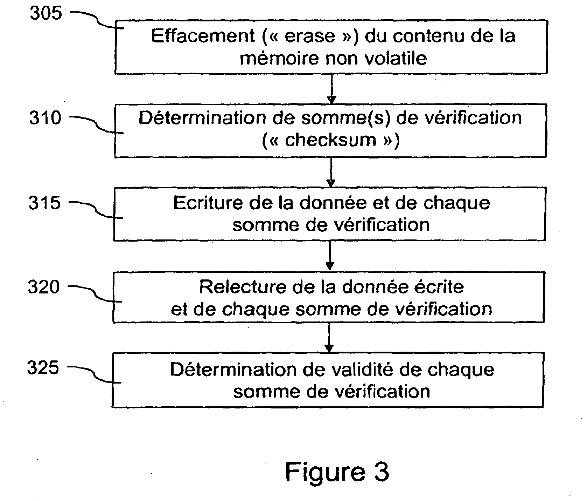

Comme décrit plus loin en regard de la figure 4, une variante de cet algorithme consiste à utiliser une fonction Killcard modifiée pour, lors d'une écriture à l'une des première et deuxième adresses, ne pas réaliser d'effacement de la zone d'écriture, de relecture et/ou de vérification de donnée de vérification, notamment de somme de vérification (« checksum »). A cet effet, avant de réaliser l'opération d'écriture, le microprocesseur de la carte détermine si cette écriture concerne l'une des adresses adresse1 ou adresse2. Si oui, l'opération d'écriture simplifiée (voir figure 4) est utilisée. Si non, l'opération d'écriture complète (voir figure 3) est réalisée. On note que la différence de traitement peut aussi résulter de l'architecture de la mémoire elle-même.

Dans des variantes, au cours de l'étape de réalisation de la fonction leurre, on effectue une écriture en mémoire non volatile, à la première adresse, d'une donnée différente de ladite donnée prédéterminée qui est écrite, à la même adresse, par la fonction de protection.

Comme on l'observe, en figure 3, un protocole courant d'écriture d'une donnée en mémoire non volatile comporte :
- une étape 305 d'effacement de la zone d'écriture, au moins à l'adresse où une donnée doit être écrite ; cette étape s'appelle, en anglais « erase » ;
- une étape 310 de détermination d'au moins une somme de vérification (en anglais « checksum ») à partir de la donnée qui doit être écrite ;
- une étape 315 d'écriture de la donnée et de chaque somme de vérification déterminée lors de l'étape 310 ;
- une étape 320 de relecture de la donnée écrite et de chaque somme de vérification et
- une étape 325 de détermination de la validité des sommes de vérification en refaisant, sur les données lues, une détermination de chaque somme de vérification correspondante et en la comparant avec la somme de vérification lue.

On note que l'étape 305 d'effacement de la zone d'écriture peut consister en une mise à un même niveau des charges de la zone d'écriture.

Comme on le comprend, ce protocole d'écriture impose une étape d'écriture très longue qui use la mémoire et ralentit l'exécution.

On note ici que la détection d'une erreur de somme de vérification pour l'adresse adresse2 n'ayant aucune conséquence, puisque les données écrites ne sont jamais relues, dans des modes de réalisation, on ne déclenche aucune action dans le cas d'une telle détection.

Dans d'autres modes de réalisation, cette détection est considérée comme un indice d'une attaque. Si on détecte un autre indice, lié par exemple, au dépassement d'une valeur limite par le nombre d'utilisations d'une clef de chiffrement ou d'authentifications de la carte, on détermine qu'une attaque se produit et on réalise la fonction de protection du microcircuit.

Comme on l'observe en figure 4, dans des modes de réalisation préférés du procédé objet de la présente invention, le protocole d'écriture à la deuxième adresse et, éventuellement, aussi à la première adresse ne comporte :
- pas l'étape d'effacement de la zone d'écriture ; cette étape est, éventuellement, maintenue pour certaines écritures choisies aléatoirement ou cycliquement, au cours d'une étape 405 ;
- pas l'étape de détermination d'au moins une somme de vérification (en anglais « checksum ») ; cette étape est, éventuellement, maintenue pour certaines écritures choisies aléatoirement ou cycliquement, au cours d'une étape 410 ;
- pas d'étape d'écriture de somme(s) de vérification ; cette étape est, éventuellement, maintenue au cours d'une étape 416 pour chaque somme de vérification déterminées au cours d'une étape 410 ;
- pas l'étape de relecture de la donnée écrite ; cette étape est, éventuellement, maintenue au cours d'une étape 420, pour les données ayant donné lieu à détermination d'au moins une somme de vérification ;
- pas l'étape de détermination de la validité des sommes de vérification en refaisant, sur les données lues, une détermination de chaque somme de vérification correspondante ; cette étape est, éventuellement, maintenue au cours d'une étape 425, pour les données ayant donné lieu à détermination d'au moins une somme de vérification.

Ainsi, dans un mode de réalisation préféré, le protocole d'écriture en mémoire non volatile, à l'une des première et deuxième adresses, ne comporte que :
- l'étape 415 d'écriture de la donnée et
- seulement pour certaines écritures de données choisies aléatoirement ou cycliquement, l'étape 405 d'effacement de la zone d'écriture et/ou les étapes 410, 416, 420 et 425.

On note ici que l'écriture effectuée par la fonction leurre peut ne jamais comporter l'effacement de la zone d'écriture (« erase ») dans le cas où l'écriture, d'une part, et le maintien de l'état écrit, d'autre part, présentent la même signature. En effet, si ces signatures sont différentes, lorsque la fonction leurre est réitérée sans effacement de la zone d'écriture (« erase »), elle maintient les mêmes cellules de mémoire non volatile à l'état écrit, ce qui impliquerait une signature différente de la fonction de protection qui, par définition, correspond à un changement d'état de cellules de la mémoire non volatile. Ainsi, si ces signatures sont différentes, au moins une partie des fonctions leurre (par exemple sélectionnées cycliquement ou aléatoirement) comportent l'effacement de la zone d'écriture.

En variante, au lieu d'éliminer totalement l'effacement de la zone d'écriture, on prévoit un effacement partiel. Un tel effacement partiel peut consister à réaliser un déchargement (ou chargement selon les architectures) des charges de chaque cellule de mémoire concernée par l'écriture pendant une durée inférieure à celle permettant un déchargement (ou chargement) complet de la cellule de mémoire.

Dans des modes de réalisation, l'écriture en mémoire non volatile effectuée par la fonction de protection comporte la génération, l'écriture, la relecture et la vérification de somme(s) de vérification alors que l'écriture en mémoire non volatile effectuée par la fonction leurre ne les comporte pas. En variante, comme exposé plus bas, seule certaines écritures (sélectionnées cycliquement ou aléatoirement) effectuées par la fonction leurre comportent la génération, l'écriture, la relecture et la vérification de somme(s) de vérification. Dans ces deux derniers cas, l'usure de la mémoire est réduite, la vitesse de fonctionnement normal du microcircuit est augmentée, tout en interdisant à un attaquant de reconnaître la réalisation de la fonction de protection.

En conséquence, le délai de finalisation de l'écriture est très limité lorsqu'il n'y a pas d'effacement de la zone d'écriture et/ou pas de mise en oeuvre de somme(s) de vérification, par rapport à l'état de l'art. On évite ainsi de trop ralentir le fonctionnement du microcircuit par la réalisation répétée de la fonction leurre. De plus, on réduit l'usure de la mémoire par les écritures réalisées par la fonction leurre. En effet, les cellules de mémoire utilisées par la fonction leurre pourraient vieillir assez vite puisque les mémoires ont une durée de vie limitée en termes de nombre de cycles d'écriture. En retirant l'étape de relecture des données écrites ainsi que l'étape d'effacement de la zone d'écriture (« erase »), non seulement on réduit la durée d'écriture mais on allonge la durée de vie des cellules de mémoire utilisées par la fonction leurre.

On note aussi que, si le vieillissement de la cellule provoque des erreurs détectables par la mise en oeuvre d'une somme de vérification, celle-ci permet de détecter cette détérioration. Dans ce cas, le programme de fonctionnement peut commuter automatiquement l'écriture par la fonction leurre sur une autre cellule inutilisée.

On note que la présente invention peut être mise en oeuvre sous la forme d'un programme s'exécutant dans le microcircuit ou sous la forme d'un circuit intégré spécialisé, par exemple un ASIC (pour Application-Specific Integrated Circuit), un circuit logique programmable ou un circuit intégré logique qui peut être reprogrammé après sa fabrication.

Lorsqu'une carte à microcircuit met en oeuvre le mode de réalisation préféré du procédé objet de la présente invention, l'attaquant qui analyse la consommation électrique ne peut pas déterminer dans quel cas la carte agit après détection d'une attaque.

Dans des modes de réalisation, une entité électronique de poche ou portable comporte un dispositif de protection d'un microcircuit qui met en oeuvre le procédé de protection objet de la présente invention.

Par exemple, cette entité électronique est un PDA (acronyme de « personal digital assistant » pour assistant personnel numérique), une clef USB (acronyme de « universal serial bus » pour bus série universel), une carte à mémoire, un téléphone mobile, un passeport électronique ou une carte à puce (c'est-à-dire conforme à la norme ISO 7816 et sécurisée, par exemple certifiée conformément aux critères communs).

On note que, préférentiellement, la fonction leurre n'a pas d'autre effet/résultat/fonction que le fait d'être un leurre pour la fonction de protection, en étant perceptible, depuis l'extérieur du microcircuit, de manière sensiblement identique à la fonction de protection.

La fonction leurre n'est ainsi pas fonctionnelle et n'influence pas le fonctionnement du microcircuit en dehors de la phase d'exécution de cette fonction leurre. Par exemple, la fonction leurre effectue l'écriture de données qui ne sont jamais lues ou utilisées ou le chiffrement d'au moins une donnée inutile au fonctionnement du microcircuit. Grâce à cette caractéristique préférentielle, on peut prévoir une fonction leurre plus rapide, par exemple une écriture plus rapide, par exemple, sans étape d'effacement et/ou sans étape de vérification de donnée écrite, que si la fonction leurre était utile au fonctionnement du microcircuit.

## Revendications

1. Procédé de protection d'un microcircuit contre une attaque, comportant :
- une étape (205) de détermination si une attaque est détectée,
- si une attaque est détectée, une étape (210, 510) de réalisation d'une fonction de protection, **caractérisé en ce que** le procédé comporte en outre :
- si aucune attaque n'est détectée, une étape (215, 515) de réalisation d'une fonction leurre simulant la fonction de protection en étant perceptible, depuis l'extérieur dudit microcircuit, de manière sensiblement identique à la fonction de protection, et **en ce que** ladite fonction de protection est une fonction de mise hors service du microcircuit.

2. Procédé selon la revendication 1, **caractérisé en ce que** la fonction leurre présente une consommation électrique sensiblement identique à celle de la fonction de protection.

3. Procédé selon l'une quelconque des revendications 1 ou 2, **caractérisé en ce que** la fonction de protection effectue une étape d'écriture d'une donnée prédéterminée à une première adresse d'une mémoire non-volatile.

4. Procédé selon la revendication 3, **caractérisé en ce que** la fonction leurre effectue une étape d'écriture en mémoire non volatile à une deuxième adresse différente de la première adresse.

5. Procédé selon la revendication 4, **caractérisé en ce que**, au cours de l'étape d'écriture à la deuxième adresse par la fonction leurre, on écrit un même nombre d'informations binaires qu'au cours de l'écriture à la première adresse par la fonction de protection, et on met en oeuvre le même algorithme d'écriture que lors de l'écriture à la première adresse par la fonction de protection.

6. Procédé selon l'une quelconque des revendications 3 à 5, **caractérisé en ce que** lesdites étapes d'écriture en mémoire non volatile mettent en oeuvre un algorithme différent des autres étapes d'écriture en mémoire non volatile effectuées lors du fonctionnement normal du microcircuit.

7. Procédé selon l'une quelconque des revendications 3 à 6, **caractérisé en ce que**, au cours d'au moins une partie des dites étapes d'écriture en mémoire non volatile, on ne met pas en oeuvre de donnée de vérification.

8. Procédé selon l'une quelconque des revendications 3 à 7, **caractérisé en ce que**, au cours d'au moins une partie des dites étapes d'écriture en mémoire non volatile, on ne met pas en oeuvre de relecture de la donnée écrite.

9. Procédé selon l'une quelconque des revendications 3 à 8, **caractérisé en ce que**, au cours d'au moins une partie des dites étapes d'écriture en mémoire non volatile, on ne met pas en oeuvre d'effacement de la zone d'écriture (« erase »).

10. Procédé selon la revendication 9, **caractérisé en ce que**, si la ré-écriture de données, en mémoire non volatile est perceptible, depuis l'extérieur dudit microcircuit, de manière identique à l'écriture initiale des dites données, la fonction leurre ne comporte pas d'effacement de la zone d'écriture.

11. Procédé selon la revendication 9, **caractérisé en ce que** la fonction de protection met en oeuvre ladite étape d'effacement de la zone d'écriture.

12. Procédé selon la revendication 11, **caractérisé en ce qu'**une partie des exécutions de la fonction leurre comporte ladite étape d'effacement de la zone d'écriture.

13. Procédé selon l'une quelconque des revendications 1 à 12, **caractérisé en ce que** la fonction de protection effectue une étape de chiffrement d'au moins une donnée sensible.

14. Procédé selon l'une quelconque des revendications 1 à 13, **caractérisé en ce que** la fonction leurre n'a pas d'autre fonction que de simuler la fonction de protection.

15. Dispositif de protection d'un microcircuit contre une attaque, comportant :
- un moyen (110, 120, 130, 150) de détermination si une attaque est détectée et
- un moyen de contrôle (110, 120, 130, 150) adapté :
- si une attaque est détectée, à réaliser une fonction de protection,
ledit moyen de contrôle étant adapté:
- si aucune attaque n'est détectée, à réaliser une fonction leurre simulant la fonction de protection en étant perceptible, depuis l'extérieur dudit microcircuit, de manière sensiblement identique à la fonction de protection, et dans lequel
ladite fonction de protection est une fonction de mise hors service du microcircuit.

## Patentansprüche

1. Verfahren zum Schutz eines Mikroschaltkreises vor einem Angriff, **dadurch gekennzeichnet, dass** es Folgendes umfasst:
- einen Schritt (205) des Bestimmens, ob ein Angriff ermittelt wird,
- wenn ein Angriff ermittelt wird, einen Schritt (210, 510) des Ausführens einer Schutzfunktion, und
- wenn kein Angriff ermittelt wird, einen Schritt (215, 515) des Ausführens einer Scheinfunktion, die die Schutzfunktion simuliert, indem sie auf im Wesentlichen identische Weise wie die Schutzfunktion von außerhalb des Mikroschaltkreises wahrnehmbar ist.

2. Verfahren nach Anspruch 1, **dadurch gekennzeichnet, dass** die Scheinfunktion einen Stromverbrauch aufweist, der im Wesentlichen identisch mit demjenigen der Schutzfunktion ist.

3. Verfahren nach einem der Ansprüche 1 oder 2, **dadurch gekennzeichnet, dass** die Schutzfunktion einen Schritt des Schreibens eines vorbestimmten Datenelements an einer ersten Adresse eines nichtflüchtigen Speichers durchführt.

4. Verfahren nach Anspruch 3, **dadurch gekennzeichnet, dass** die Scheinfunktion einen Schritt des Schreibens in den nichtflüchtigen Speicher an einer zweiten Adresse durchführt, die sich von der ersten Adresse unterscheidet.

5. Verfahren nach Anspruch 4, **dadurch gekennzeichnet, dass** während des Schritts des Schreibens an der zweiten Adresse durch die Scheinfunktion eine selbe Anzahl von Binärinformationen geschrieben wird wie während des Schreibens an der ersten Adresse durch die Schutzfunktion und derselbe Schreibalgorithmus eingesetzt wird wie beim Schreiben an der ersten Adresse durch die Schutzfunktion.

6. Verfahren nach einem der Ansprüche 3 bis 5, **dadurch gekennzeichnet, dass** die Schritte des Schreibens in den nichtflüchtigen Speicher einen Algorithmus einsetzen, der sich von demjenigen der anderen Schritte des Schreibens in den nichtflüchtigen Speicher unterscheidet, die während des normalen Betriebs des Mikroschaltkreises durchgeführt werden.

7. Verfahren nach einem der Ansprüche 3 bis 6, **dadurch gekennzeichnet, dass** während zumindest eines Teils der Schritte des Schreibens in den nichtflüchtigen Speicher kein Prüfdatenelement eingesetzt wird.

8. Verfahren nach einem der Ansprüche 3 bis 7, **dadurch gekennzeichnet, dass** während zumindest eines Teils der Schritte des Schreibens in den nichtflüchtigen Speicher kein erneutes Lesen des geschriebenen Datenelements eingesetzt wird.

9. Verfahren nach einem der Ansprüche 3 bis 8, **dadurch gekennzeichnet, dass** während zumindest eines Teils der Schritte des Schreibens in den nichtflüchtigen Speicher keine Löschung ("erase") des Schreibbereichs eingesetzt wird.

10. Verfahren nach Anspruch 9, **dadurch gekennzeichnet, dass** die Scheinfunktion keine Löschung des Schreibbereichs umfasst, wenn das Neuschreiben von Daten in den nichtflüchtigen Speicher von außerhalb des Mikroschaltkreises auf eine mit dem anfänglichen Schreiben der Daten identische Weise wahrnehmbar ist.

11. Verfahren nach Anspruch 9, **dadurch gekennzeichnet, dass** die Schutzfunktion den Schritt des Löschens des Schreibbereichs einsetzt.

12. Verfahren nach Anspruch 11, **dadurch gekennzeichnet, dass** ein Teil der Ausführungen der Scheinfunktion den Schritt des Löschens des Schreibbereichs umfasst.

13. Verfahren nach einem der Ansprüche 1 bis 12, **dadurch gekennzeichnet, dass** die Schutzfunktion einen Schritt des Verschlüsselns von mindestens einem sensitiven Datenelement durchführt.

14. Verfahren nach einem der Ansprüche 1 bis 13, **dadurch gekennzeichnet, dass** die Scheinfunktion keine andere Funktion als das Simulieren der Schutzfunktion aufweist.

15. Vorrichtung zum Schutz eines Mikroschaltkreises vor einem Angriff, **dadurch gekennzeichnet, dass** sie Folgendes umfasst:
- ein Mittel (110, 120, 130, 150) zum Bestimmen, ob ein Angriff ermittelt wird, und
- ein Steuermittel (110, 120, 130, 150), das für Folgendes angepasst ist:
- zum Ausführen einer Schutzfunktion, wenn ein Angriff ermittelt wird, und
- wenn kein Angriff ermittelt wird, ein Schritt zum Ausführen einer Scheinfunktion, die die Schutzfunktion simuliert, indem sie auf im Wesentlichen identische Weise wie die Schutzfunktion von außerhalb des Mikroschaltkreises wahrnehmbar ist.

## Claims

1. Method of protection of a microcircuit against an attack, **characterised in that** it comprises:
- a step (205) of determining if an attack has been detected,
- if an attack has been detected, a step (210, 510) of executing a protection function, and
- if no attack has been detected, a step (215, 515) of executing a dummy function simulating the protection function and perceptible from outside said microcircuit in a manner substantially identical to the protection function.

2. Method according to claim 1, **characterised in that** the dummy function has a power consumption substantially identical to that of the protection function.

3. Method according to any one of claims 1 or 2, **characterised in that** the protection function performs a step of writing a predetermined item of data at a first address of a non-volatile memory.

4. Method according to claim 3, **characterised in that** the dummy function performs a step of writing in non-volatile memory at a second address different from the first address.

5. Method according to claim 4, **characterised in that**, during the step of writing at the second address by the dummy function, the same number of items of binary information is written as during the writing at the first address by the protection function, and the same writing algorithm is used as for writing at the first address by the protection function.

6. Method according to any one of claims 3 to 5, **characterised in that** said steps of writing in non-volatile memory use a different algorithm to other steps of writing in non-volatile memory performed during normal operation of the microcircuit.

7. Method according to any one of claims 3 to 6, **characterised in that**, during at least some of said steps of writing in non-volatile memory, verification data is not used.

8. Method according to any one of claims 3 to 7, **characterised in that**, during at least some of said steps of writing in non-volatile memory, the written data is not reread.

9. Method according to any one of claims 3 to 8, **characterised in that**, during at least some of said steps of writing in non-volatile memory, erasing of the writing area is not performed.

10. Method according to claim 9, **characterised in that**, if the rewriting of data in non-volatile memory is perceptible from outside said microcircuit, in identical manner to the initial writing of said data, the dummy function does not comprise erasing the writing area.

11. Method according to claim 9, **characterised in that** the protection function uses said step of erasing the writing area.

12. Method according to claim 11, **characterised in that** some executions of the dummy function comprise said step of erasing the writing area.

13. Method according to any one of claims 1 to 12, **characterised in that** the protection function performs a step of encryption of at least one sensitive item of data.

14. Method according to any one of claims 1 to 13, **characterised in that** the dummy function has no function other than simulating the protection function.

15. Device for protection of a microcircuit against an attack, **characterised in that** it comprises:
- means (110, 120, 130, 150) for determining if an attack has been detected and
- control means (110, 120, 130, 150) adapted:
- if an attack has been detected, to execute a protection function, and
- if no attack has been detected, a step of executing a dummy function simulating the protection function and perceptible from outside said microcircuit in a manner substantially identical to the protection function.
